(19) Europäisches Patentamt

European Patent Office

Office européen des brevets

(11) **EP 1 701 464 A1**

(12) **EUROPEAN PATENT APPLICATION**

(43) Date of publication:
**13.09.2006 Bulletin 2006/37**

(51) Int Cl.:
*H04L 1/06* (2006.01)        *H04L 27/26* (2006.01)

(21) Application number: **06004769.3**

(22) Date of filing: **08.03.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **09.03.2005  KR 2005019849**

(71) Applicant: **Samsung Electronics Co., Ltd.
Suwon-si, Gyeonggi-Do (KR)**

(72) Inventors:
 • **Oh, Jeong-Tae
  Yongin-si
  Gyeonggi-do (KR)**
 • **Roh, Won-Il
  Yongin-si
  Gyeonggi-do (KR)**
 • **Ko, Kyun-Byoung
  Hwasung-si
  Gyeonggi-do (KR)**
 • **Jeon, Jae-Ho
  Sungnam-si
  Gyeonggi-do (KR)**
 • **Maeng, Seung-Joo
  Bundang-gu
  Sungnam-si
  Gyeonggi-do (KR)**
 • **Yun, Sung-Ryul
  Yeongtong-gu
  Suwon-si
  Gyeonggi-do (KR)**
 • **Chae, Chan-Byoung
  Seoul (KR)**
 • **Jeong, Hong-Sil
  Seoul (KR)**

(74) Representative: **Grünecker, Kinkeldey,
  Stockmair & Schwanhäusser
  Anwaltssozietät
  Maximilianstrasse 58
  80538 München (DE)**

(54) **Apparatus and method for mapping space-time coded data to subcarriers in a broadband wireless communication system**

(57)    A method of mapping Space-Time Coding (STC) data to subcarriers in a broadband wireless communication system using multiple antennas is provided. Transmission symbols are encoded according to a predetermined space-time coding matrix and the coded data symbols are mapped to time-space-subcarriers according to a mapping rule determined by the space-time coding matrix.

401~ ▨ PILOT FOR ANT #1
     ▨ SHIFTED PILOT FOR ANT #2
401~ ▨ ORIGINAL PILOT FOR ANT #1

FIG.4

EP 1 701 464 A1

**Description**

**PRIORITY**

This application claims priority under 35 U.S.C. § 119 to an application filed in the Korean Intellectual Property Office on March 9, 2005 and assigned Serial No. 2005-19849, the contents of which are incorporated herein by reference.

**BACKGROUND OF THE INVENTION**

1. Field of the Invention

The present invention relates to an apparatus and method for mapping data in a broadband wireless communication system, and in particular, to an apparatus and method for allocating space-time coded data to subcarriers in an Orthogonal Frequency Division Multiple Access (OFDMA) communication system.

2. Description of the Related Art

The fundamental issue in communications is how efficiently and reliably data is transmitted on channels. Today, mobile communication systems are being developed toward high-speed, high-quality wireless data packet communication systems to additionally provide data service and multimedia service beyond voice-oriented service.

In the wireless channel environment of a mobile communication system, unlike that of a wired channel environment, a transmission signal inevitably experiences loss due to several factors such as multipath interference, shadowing, wave attenuation, time-variant noise, and fading.

The information loss causes a severe distortion to the transmission signal, degrading the whole system performance. In order to reduce the information loss, many error control techniques may be adopted to thereby increase system reliability. The basic error control technique is to use an error correction code.

Multipath fading is relieved by diversity techniques in the wireless communication system. The diversity techniques are broken up into time diversity, frequency diversity, and antenna diversity.

The antenna diversity uses multiple antennas. This diversity scheme is further branched into receive (Rx) antenna diversity using a plurality of Rx antennas, transmit (Tx) antenna diversity using a plurality of Tx antennas, and Multiple-Input Multiple-Output (MIMO) using a plurality of Tx antennas and a plurality of Rx antennas.

The MIMO is a special case of Space-Time Coding (STC) that extends coding of the time domain to the space domain by transmission of a signal encoded in a predetermined coding method through a plurality of Tx antennas, with the aim to achieve a lower error rate.

V Tarokh, et al. proposed Space-Time Block Coding (STBC) as one of methods of efficiently applying antenna diversity (see "Space-Time Block Coding from Orthogonal Designs", IEEE Trans. On Info., Theory, Vol. 45, pp. 1456-1467, July 1999). The Tarokh STBC scheme is an extension of the transmit antenna diversity scheme of S. M. Alamouti (see, "A Simple Transmit Diversity Technique for Wireless Communications", IEEE Journal on Selected Area in Communications, Vol. 16, pp. 1451-1458, October 1988), for two or more Tx antennas. The Alamouti STBC scheme advantageously offers a maximum diversity order, that is a diversity order equal to the number of transmit antennas without data rate loss, even though complex symbols are transmitted through two Tx antennas.

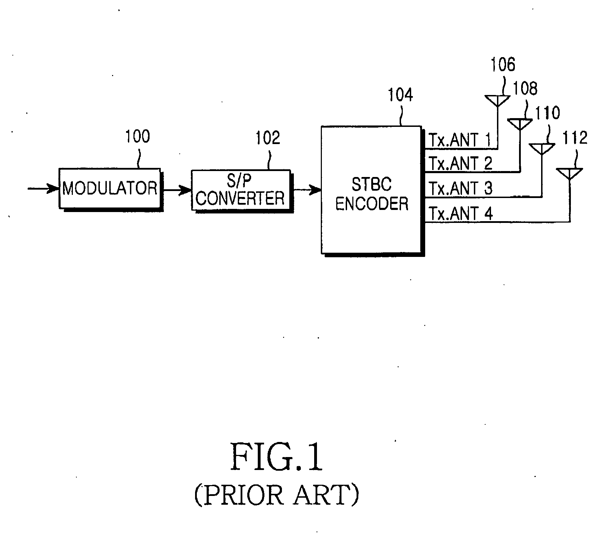

FIG. 1 is a block diagram of a transmitter in a conventional wireless communication system using the Tarokh STBC scheme. The transmitter is comprised of a modulator 100, a Serial-to-Parallel (S/P) converter 102, an STBC encoder 104, and four Tx antennas 106, 108, 110 and 112.

Referring to FIG. 1, the modulator 100 modulates input information data (or coded data) in a predetermined modulation scheme. The modulation scheme can be one of Binary Phase Shift Keying (BPSK), Quadrature Phase Shift Keying (QPSK), Quadrature Amplitude Modulation (QAM), Pulse Amplitude Modulation (PAM), and Phase Shift Keying (PSK).

The S/P converter 102 parallelizes the serial modulation symbols received from the modulator 100, $s_1$, $s_2$, $s_3$, $s_4$. The STBC coder 104 creates eight symbol combinations by STBC-encoding the four modulation symbols, $s_1$, $s_2$, $s_3$, $s_4$ and sequentially transmits them through the four Tx antennas 106 to 112. A coding matrix used to generate the eight symbol combinations is expressed as Equation (1):

$$G_4 = \begin{bmatrix} s_1 & s_2 & s_3 & s_4 \\ -s_2 & s_1 & -s_4 & s_3 \\ -s_3 & s_4 & s_1 & -s_2 \\ -s_4 & -s_3 & s_2 & s_1 \\ s_1^* & s_2^* & s_3^* & s_4^* \\ -s_2^* & s_1^* & -s_4^* & s_3^* \\ -s_3^* & s_4^* & s_1^* & -s_2^* \\ -s_4^* & -s_3^* & s_2^* & s_1^* \end{bmatrix}$$

$$\ldots\ldots(1)$$

where $G_4$ denotes the coding matrix for symbols transmitted through the four Tx antennas 106 to 112 and $s_1$, $s_2$, $s_3$, $s_4$ denote the input four symbols to be transmitted. The number of columns in the coding matrix is equal to that of the Tx antennas and the number of rows corresponds to the time required to transmit the four symbols. Thus, the four symbols are transmitted through the four Tx antennas for eight time intervals.

Specifically, for a first time interval, $s_1$, is transmitted through the first Tx antenna 106, $s_2$ through the second Tx antenna 108, $s_3$ through the third Tx antenna 110, and $s_4$ through the fourth Tx antenna 112. In this manner, $-s_4^*$, , $-s_3^*$, $s_2^*$, $s_1^*$ are transmitted through the first to fourth Tx antennas 106 to 112, respectively for an eighth time interval. That is, the STBC encoder 104 sequentially provides the symbols of an $i^{th}$ column in the coding matrix to an $i^{th}$ Tx antenna.

As described above, the STBC encoder 104 generates the eight symbol sequences using the input four symbols and their conjugates and negatives, then transmits them through the four Tx antennas 106 to 112 for eight time intervals. Since the symbol sequences for the respective Tx antennas, that is the columns of the coding matrix are mutually orthogonal, as high a diversity gain as a diversity order is achieved. However, since four complex symbols are transmitted for eight time intervals, the data rate is 1/2. This implies that 2N time intervals are taken to transmit N symbols, thereby increasing latency and decreasing the data rate.

To solve the above problem, a Full Diversity Full Rate (FDFR) STBC scheme for four Tx antennas was proposed.

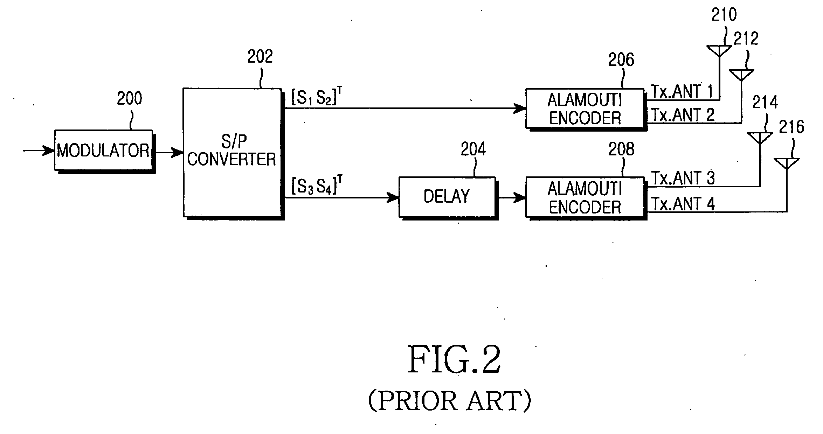

FIG. 2 is a block diagram of a transmitter in a conventional wireless communication system using the FDFR STBC. The transmitter includes a modulator 200, an S/P converter 202, a delay 204, two Alamouti encoders 206 and 208, and four Tx antennas 210, 212, 214 and 216.

The modulator 200 generates complex symbols $s_1$, $s_2$, $s_3$, $s_4$ by modulating input information data (or coded data) in a predetermined modulation scheme. The S/P converter 202 groups the four complex symbols by two and outputs two vectors each including two elements, $[S_1, S_2]^T$ and $[S_3, S_4]^T$ to the Alamouti encoder 206 and the delay 204, respectively.

The delay 204 delays the second vector $[S_3, S_4]^T$ for one time interval. Thus, the first vector $[S_1, S_2]^T$ is provided to the Alamouti encoder 206 in a first time interval and the second vector $[S_3, S_4]^T$ is provided to the Alamouti coder 208 in a second time interval. The Alamouti encoder refers to an encoder that operates in the Alamouti STBC scheme.

The Alamouti encoder 206 encodes $[s_1, s_2]^T$ so that it is transmitted through the first and second Tx antennas 210 and 212 for first and second time intervals. The Alamouti coder 208 encodes $[s_3, s_4]^T$ so that it is transmitted through the third and fourth Tx antennas 214 and 216 for third and fourth time intervals. A coding matrix used to transmit the outputs of the Alamouti encoders 206 and 208 through the multiple antennas is shown in Equation (2):

$$S = \begin{bmatrix} s_1 & -s_2^* & 0 & 0 \\ s_2 & s_1^* & 0 & 0 \\ 0 & 0 & s_3 & -s_4^* \\ 0 & 0 & s_4 & s_3^* \end{bmatrix}$$

$$\ldots\ldots(2)$$

where an $i^{th}$ column represents an $i^{th}$ time interval and a $j^{th}$ row represents a $j^{th}$ transmit antenna.

To be more specific, $s_1$ and $s_2$ are transmitted through the first and second Tx antennas 210 and 212, respectively for a first time interval. Symbols $-s_2^*$ and $s_1^*$ are transmitted through the first and second Tx antennas 210 and 212, respectively for a second time interval. Symbols $s_3$ and $s_4$ are transmitted through the third and fourth Tx antennas 214 and 216, respectively for a third interval. Symbols $-s_4^*$ and $s_3^*$ are transmitted through the third and fourth Tx antennas 214 and 216, respectively for a fourth time interval.

As described above, Spatial Diversity (SD) achieves transmit diversity by transmitting the same data through multiple antennas. However, the diversity order increases with the number of transmit antennas but decreases a gain increase rate. In other words, as the number of antennas increases, the diversity order is saturated rather than linearly increasing.

In contrast, Spatial Multiplexing (SM) offers the benefit of high-speed data transmission without increasing the bandwidth of the system by transmitting different data at the same time through multiple antennas in the transmitter and the receiver.

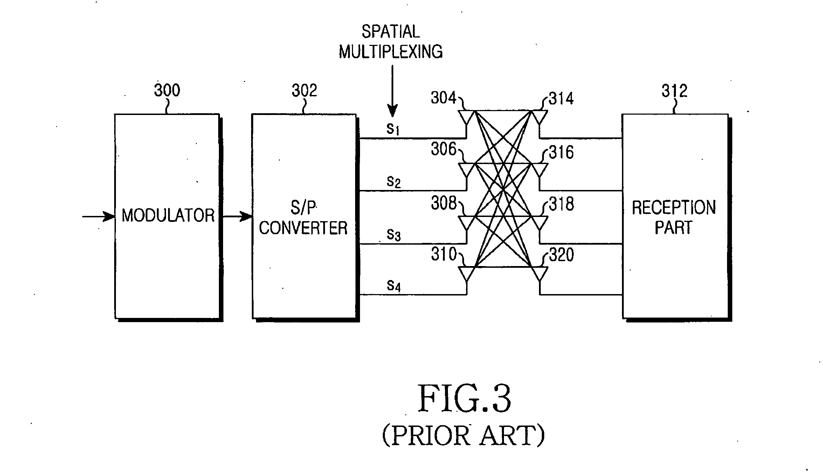

FIG. 3 is a block diagram of a conventional wireless communication system using SM. As illustrated, a transmitter is comprised of a modulator 300, an S/P converter 302, and four Tx antennas 304, 306, 308 and 310. A receiver is comprised of four Rx antennas 314, 316, 318 and 320 and a reception part 312.

The modulator 300 modulates input information data (or coded data) in a predetermined modulation scheme. The S/P converter 302 spatially multiplexes four modulation symbols $s_1$, $s_2$, $s_3$, $s_4$ as Equation (3):

$$S = \begin{bmatrix} s_1 \\ s_2 \\ s_3 \\ s_4 \end{bmatrix}$$

$$\ldots\ldots(3)$$

where the number of columns is equal to that of Tx antennas, and the number of rows is equal to the time required for transmitting the four transmission symbols. Since four symbols are transmitted for one time interval, the data rate is 4.

Meanwhile, the reception part 312 of the receiver estimates the transmitted symbols $s_1$, $s_2$, $s_3$, $s_4$ from signals received through the four Rx antennas 314, 316, 318 and 320.

Orthogonal Frequency Division Multiplexing (OFDM) is promising for reducing channel fading in $4^{th}$ generation mobile communication systems. Particularly, multi-user OFDM systems are under consideration in which a plurality of users are simultaneously supported and identified in the frequency domain. Since channel variation in the frequency domain must be considered in the OFDM system, spatial antenna diversity is inevitable. Accordingly, there exists a need for a technique of effectively mapping STC encoded data symbols to subcarriers in the case where the above-described antenna transmission methods (MIMO or STC) are applied to OFDM systems.

**SUMMARY OF THE INVENTION**

An object of the present invention is to substantially solve at least the above problems and/or disadvantages and to provide at least the advantages below. Accordingly, an object of the present invention is to provide an apparatus and method for mapping STC encoded data symbols to subcarriers in an OFDMA wireless communication system. The above object is achieved by providing a method of mapping STC encoded data symbols to subcarriers in a broadband wireless communication system using multiple antennas.

According to one aspect of the present invention, in a transmission method in a broadband wireless communication system using multiple antennas, transmission symbols are encoded according to a predetermined space-time coding matrix and the coded data symbols are mapped to time-space-subcarriers according to a mapping rule determined by the space-time coding matrix.

According to another aspect of the present invention, in a transmitter in a broadband wireless communication system using multiple antennas, a space-time encoder encodes transmission symbols according to a predetermined space-time coding matrix, and a mapper maps the coded data symbols received from the space-time encoder to time-space-subcarriers according to a mapping rule determined by the space-time coding matrix.

## BRIEF DESCRIPTION OF THE DRAWINGS

The above and other objects, features and advantages of the present invention will become more apparent from the following detailed description when taken in conjunction with the accompanying drawings in which:

FIG. 1 is a block diagram of a transmitter in a wireless communication system using a conventional STBC scheme;
FIG. 2 is a block diagram of a transmitter in a wireless communication system using a conventional FDFR STBC scheme;
FIG. 3 is a block diagram of a wireless communication system using a conventional SM scheme;
FIG. 4 illustrates the positions of subcarriers to which pilots are mapped in an OFDMA wireless communication system with two Tx antennas according to the present invention;
FIG. 5 illustrates the positions of subcarriers to which pilots are mapped in an OFDMA wireless communication system with four Tx antennas according to the present invention;
FIG. 6 illustrates a method of mapping STC encoded data symbols to a first antenna in the OFDMA wireless communication system with two Tx antennas according to the present invention;
FIG. 7 illustrates a method of mapping STC encoded data symbols to a first antenna in the case of using a Convolutional Turbo Code (CTC) as a channel code in the OFDMA wireless communication system with four Tx antennas according to the present invention;
FIG. 8 illustrates a method of mapping STC encoded data symbols to the first antenna in the case of using a Convolutional Code (CC) as a channel code in the OFDMA wireless communication system with four Tx antennas according to the present invention;
FIG 9 illustrates a method of mapping SM data to the first antenna when a vertical encoding SM is used in the OFDMA wireless communication system with two Tx antennas according to the present invention;
FIG. 10 illustrates a method of mapping SM data to the first antenna when a horizontal encoding SM is used in the OFDMA wireless communication system with two Tx antennas according to the present invention; and
FIG. 11 is a block diagram of a transmitter in a MIMO-OFDMA wireless communication system according to the present invention.

## DETAILED DESCRIPTION OF THE PREFERRED EMBODIMENTS

Embodiments of the present invention will be described herein below with reference to the accompanying drawings. In the following description, well-known functions or constructions are not described in detail since they would obscure the invention in unnecessary detail.

The present invention provides a method of mapping STC (Space Time Coding) encoded data symbols to subcarriers in a MIMO-OFDMA wireless communication system. For example, the following description is made in the context of STC schemes compliant with IEEE 802.16e.

The STC encoded data symbols mapping will be described first in relation to Adaptive Modulation and Coding (AMC) permutation in STC zone and then in relation to diversity permutation (or Optional Full Usage of Subcarriers (O-FUSCs)). In the former case, a minimum unit (i.e. slot) that supports MIMO is a 2x6 (2 bins x 6 OFDM symbols) structure. In the latter case, a 1x2 (1 subchannel x 2 OFDM symbols) structure is used.

How pilots are mapped to subcarriers in a MIMO-OFDMA wireless communication system will be described below.

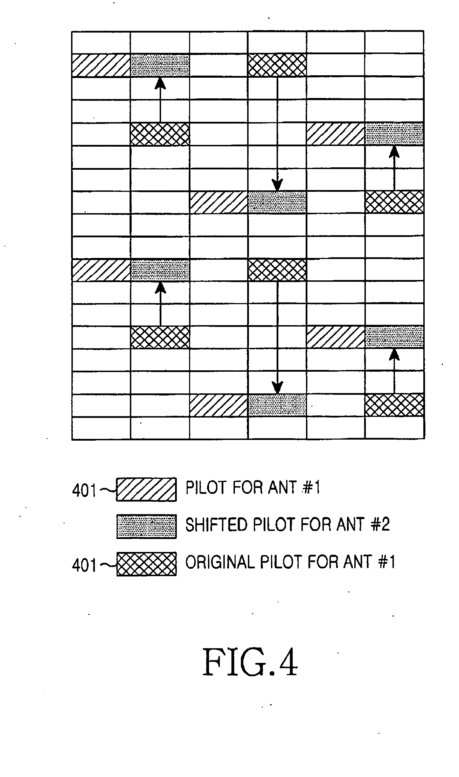

FIG. 4 illustrates the positions of subcarriers to which pilots are mapped in an OFDMA wireless communication system with two Tx antennas according to the present invention. A minimum MIMO-supporting unit (i.e. slot) is shown. Reference numeral 401 denotes the positions of pilots in Single-Input Single-Output (SISO). Two pilots are mapped onto each OFDM symbol such that they are spaced from each other by 8 subcarriers. Pilot #1 is mapped to subcarrier #2 in OFDM symbol #1, to subcarrier #5 in OFDM symbol #2, and to subcarrier #8 in OFDM symbol #3. This pattern (2→5→8) is then repeated.

In MIMO for two Tx antennas, antenna #1 transmits pilots in odd-numbered OFDM symbols and antenna #2 transmits pilots in even-numbered OFDM symbols. As illustrated in FIG. 4, antenna #1 and antenna #2 transmit pilots on the same subcarriers #2 and #11 in OFDM symbols #1 and #2, respectively. Also, antenna #1 and antenna #2 transmit pilots on the same subcarriers #8 and #17 in OFDM symbols #3 and #4, respectively.

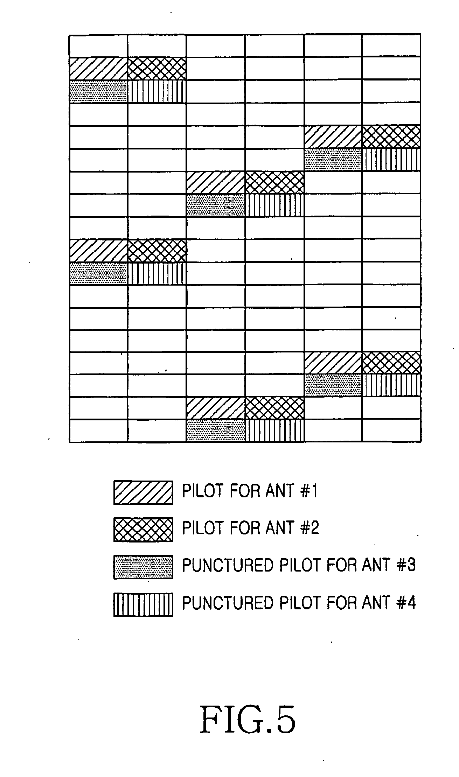

FIG. 5 illustrates the positions of subcarriers to which pilots are mapped in an OFDMA wireless communication system with four Tx antennas according to the present invention. Pilots are mapped to the same or adjacent subcarriers for four Tx antennas. Pilots for antenna #1 and antenna #2 are mapped to the same subcarriers, and pilots for antenna #3 and antenna #4 are mapped to the following subcarriers. The reason for mapping pilots to be adjacent to each other in time and frequency is to enable pilots transmitted through a plurality of Tx antennas to experience similar channels.

Hereinbelow, basic pilot positions are defined as the positions of subcarriers for antenna #1 and antenna #2, and additional pilot positions are defined as the positions of subcarriers for antenna #3 and antenna #4.

When pilots are mapped in the manners illustrated in FIGs. 4 and 5, STC encoded data symbols are mapped to subcarriers as follows.

At first, a data mapping rule in the case of an AMC permutation will be described. First for two Tx antennas, a codingmatrix A for a rate-1 STBC is given as Equation (4):

$$A = \begin{bmatrix} s_0 & -s_1^* \\ s_1 & s_0^* \end{bmatrix} \qquad \ldots \ldots (4)$$

where the rows represent antenna indexes and the columns represent OFDM symbol indexes.

The STC encoded data symbols expressed as the above matrix is mapped to subcarriers in the following manner.

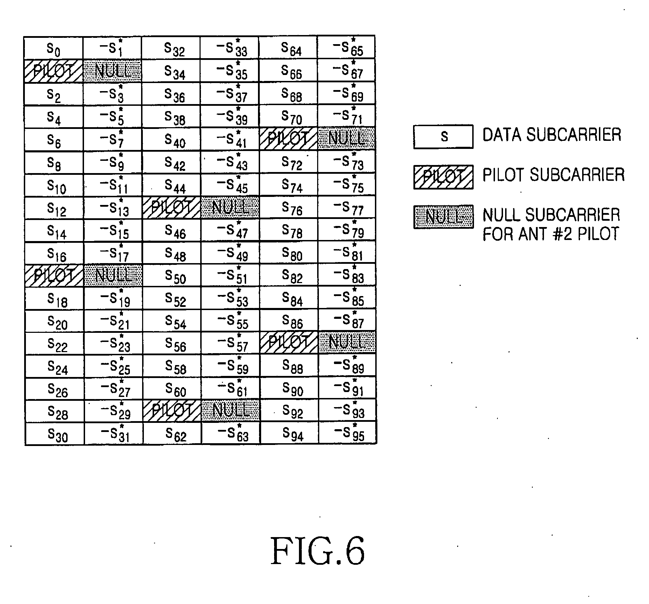

FIG. 6 illustrates a method of mapping STC encoded data symbols to Ant #1 in the OFDMA wireless communication system with two Tx antennas according to an embodiment of the present invention. The minimum MIMO-supporting unit (i.e. slot) is illustrated. STC encoded data symbols is allocated on a slot basis, starting from a slot with the lowest index. For an STBC, one slot is divided into three groups in time, each group including 2 bins x 2 OFDM symbols, and data is allocated on a group basis. Thus, data is allocated to the remaining subcarriers except the basic pilot positions from 18 subcarriers in group #1, in group #2, and then in group #3. For instance, since no data is mapped to subcarriers #2 and #11 in group #1, STC encoded data symbols (or complex symbols) are mapped to a total of 32 subcarriers in group #1. After the data mapping, pilots are mapped to predetermined pilot positions for Ant #1, that is subcarriers #2 and #11 in OFDM symbol #1, subcarriers #8 and 17 in OFDM symbol #3, etc.

For Ant #2, encoded data expressed in the second row of the coding matrix of Equation (4) is mapped to subcarriers in the above manner.

For four Tx antennas, a coding matrix A for an STBC is given as Equation (5):

$$A = \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix} \qquad \ldots \ldots (5)$$

where the rows represent antenna indexes and the columns represent time and subcarriers. In a slot, the first two columns are mapped to odd-numbered subcarriers and the second two columns are mapped to even-numbered subcarriers. The first and third columns are mapped in odd-numbered OFDM symbols and the second and fourth columns are mapped in even-numbered OFDM symbols.

Subcarrier indexes are decided for data mapping by counting the remaining subcarriers except pilot subcarriers. If a CC (Convolutional code) is used, the remaining subcarriers except the basic pilot positions are counted. If a CTC(Convolutional Turbo Code) is used, the remaining subcarriers except the main and additional pilot positions are counted. Therefore, the odd-numbered subcarriers or the even-numbered subcarriers may change physically in position depending on the channel code used.

The STC encoded data symbols expressed as the above matrix is mapped to subcarriers in the following manner.

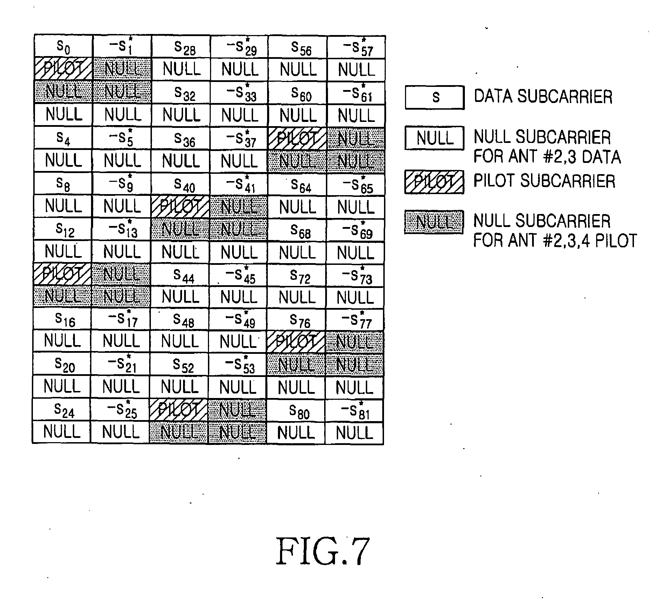

FIG. 7 illustrates a method of mapping STC encoded data symbols to Ant #1 in the OFDMA wireless communication system with four Tx antennas according to the present invention. Particularly, the illustrated data mapping is for the case of using a CTC. The minimum MIMO-supporting unit (i.e. slot) is illustrated. The mapping of STC encoded data symbols starts at the lowest numbered subcarriers of the lowest slot and continues in an ascending manner in subchannels first and then proceeds to the next two symbols in time. For an STBC, one slot is divided into three groups in time, each group including 2 bins x 2 OFDM symbols, and data is allocated on a group basis. Thus, data is allocated to the remaining subcarriers except the basic pilot positions from 18 subcarriers in group #1, in group #2, and then in group #3. For instance, since no data is mapped to subcarriers #2, #3, #11 and #12 in group #1, STC encoded data symbols (or complex symbols) including Null data are mapped to a total of 28 subcarriers in group #1. Notably, two Null data mapped to subcarrier #4 correspond to Null data in the third and fourth rows of the first column in Equation (5). After the data mapping, pilots are mapped to predetermined pilot positions for Ant #1, that is subcarriers #2 and #11 in OFDM symbol #1, subcarriers #8 and 17 in OFDM symbol #3, etc.

For Ant #2, Ant #3, and Ant #4, coded data expressed in the second, third and fourth rows of the coding matrix of Equation (5) are mapped to subcarriers, respectively in the above manner.

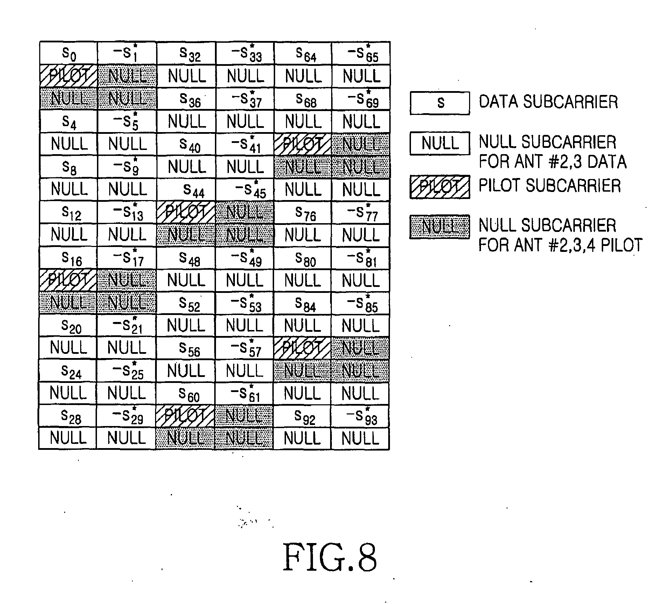

FIG. 8 illustrates a method of mapping STC encoded data symbols to Ant #1 in the OFDMA wireless communication system with four Tx antennas according to the present invention. Particularly, the illustrated data mapping is for the case of using a CC as a channel code.

In FIG. 8, the minimum MIMO-supporting unit (i.e. slot) is illustrated. Data mapping is performed basically in the same manner as that illustrated in FIG. 7, except that the remaining subcarriers except the basic pilot positions are counted for data mapping of the coding matrix expressed as Equation (5). Compared to the data mapping of FIG. 7, STC encoded data symbols, $s_4$ and $-s_5^*$ are allocated to subcarrier #4, instead of Null data. In this case, STC encoded data symbols (or complex symbols) including Null data are mapped to a total of 32 subcarriers in group #1. After the data mapping, data at the additional pilot positions are punctured for Ant #3 and Ant #4 and pilots are mapped to predetermined pilot positions for Ant #1, that is subcarriers #2 and #11 in OFDM symbol #1, subcarriers #8 and 17 in OFDM symbol #3, etc.

For an SM code, coding matrices C are given as Equation (6):

$$C = \begin{bmatrix} s_0 \\ s_1 \end{bmatrix} \text{ for two Tx antennas}$$

$$C = \begin{bmatrix} s_0 \\ s_1 \\ s_2 \\ s_3 \end{bmatrix} \text{ for four Tx antennas}$$

$$\ldots \ldots (6)$$

where the rows represent antenna indexes.

STC encoded data symbols expressed as the matrices C are mapped to subcarriers as follows.

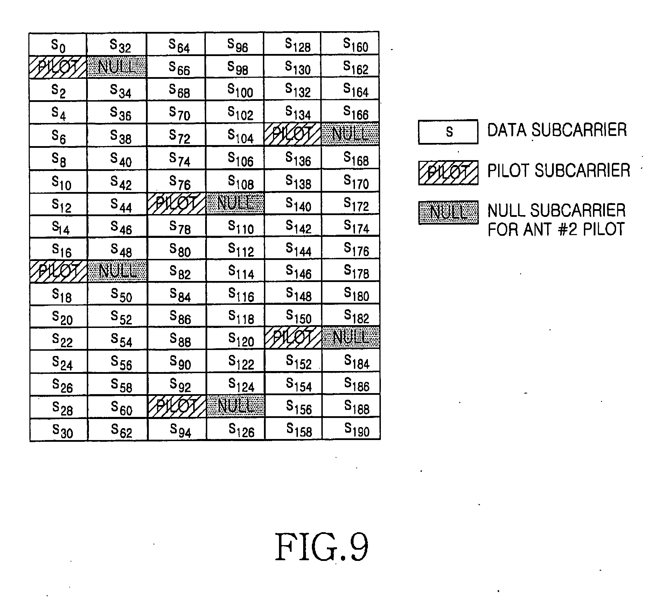

FIG. 9 illustrates a method of mapping SM data to Ant #1 in the OFDMA wireless communication system with two Tx antennas according to the present invention. Especially, the illustrated data mapping is for the case of using one coder and one modulator, which is called a vertical encoding SM.

In FIG. 9, the minimum MIMO-supporting unit (i.e. slot) is illustrated. STC encoded data symbols are allocated on a slot basis, starting from a slot with the lowest index. Data is allocated to the remaining subcarriers except the basic pilot positions from 18 subcarriers in OFDM symbol #1, in OFDM symbol #2, and then up to the last OFDM symbol. For instance, since no data is mapped to subcarriers #2 and #11 in OFDM symbol #2, STC encoded data symbols (or complex symbols) are mapped to a total of 16 subcarriers in OFDM symbol #2. After the data mapping, pilots are mapped to predetermined pilot positions for Ant #1, that is subcarriers #2 and #11 in OFDM symbol #1, subcarriers #8 and 17 in OFDM symbol #3, etc.

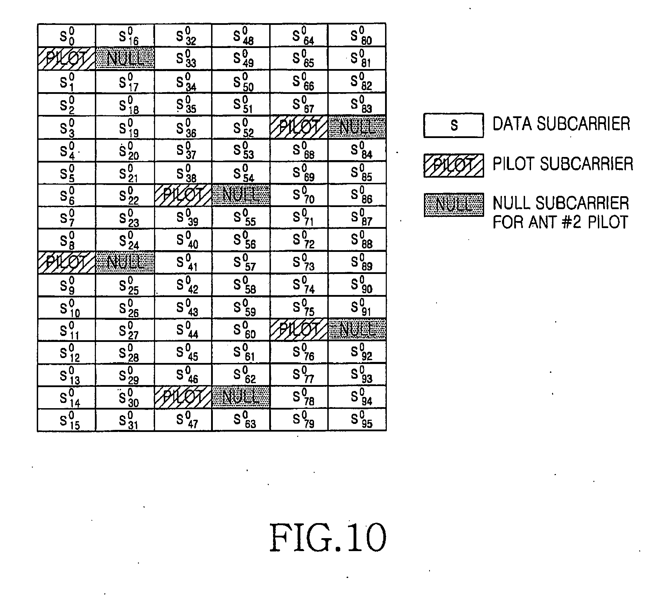

FIG 10 illustrates a method of mapping SM data to Ant #1 in the OFDMA wireless communication system with two Tx antennas according to the present invention. Especially, the illustrated data mapping is for the case of using a plurality of encoders and a plurality of modulators, which are called a horizontal encoding SM structure.

In FIG. 10, the minimum MIMO-supporting unit (i.e. slot) is illustrated. STC encoded data symbols are allocated on a slot basis, starting from a slot with the lowest index. Data is allocated to the remaining subcarriers except the basic pilot positions from 18 subcarriers in OFDM symbol #1, in OFDM symbol #2, and then up to the last OFDM symbol. For instance, since no data is mapped to subcarriers #2 and #11 in OFDM symbol #2, STC encoded data symbols (or complex symbols) are mapped to a total of 16 subcarriers in OFDM symbol #2. After the data mapping, pilots are mapped to predetermined pilot positions for Ant #1, that is subcarriers #2 and #11 in OFDM symbol #1, subcarriers #8 and 17 in OFDM symbol #3, etc.

As described above, the data mapping is performed in the same manner as illustrated in FIG 9 except that independently coded and modulated data is allocated for each antenna. That is, the data of a first stream is allocated for Ant #1.

Now a data mapping rule in the case of an O-FUSC permutation will be described. STC encoded data symbols expressed as Equation (4) is mapped to subcarriers as follows. As described above, the minimum MIMO-supporting unit (slot) is of a 1x2 (1 subchannel x 2 OFDM symbols) structure on the O-FUSC permutation.

STC encoded data symbols are sequentially allocated on a slot basis, starting from a slot with the lowest index. Since two OFDM symbols are considered one group for an STBC, one time interval is defined in one slot. For SM, one OFDM symbol forms one group and thus two time intervals are defined in one slot.

Data is mapped in one slot in the following steps:

(1) A slot (1 subchannel x two symbols) is allocated according to the number of allocated subchannels.
(2) Data mapping starts from a slot with a lower index.
(3) Data mapping starts from the first time interval (the first symbol in SM).
(4) Data mapping is performed from a lower-index subcarrier to a higher-index subcarrier (48 subcarriers).
(5) Data mapping is performed according to a coding matrix based on MIMO. When the CC is used, no data is allocated to additional pilot positions (i.e. pilot positions for Ant #3 and Ant #4). Instead, data is allocated to the following data subcarrier positions. Consequently, the last part of the whole data is not transmitted.
(6) Data mapping of steps (4) and (5) is repeated for the second time interval (i.e. the second symbol), which is confined to SM.
(7) The above steps are sequentially performed for all other slots.
(8) When the CC is used, data at the additional pilot positions are punctured after the steps of (1) to (7). For Ant #3 and Ant #4, pilot symbols are allocated at the punctured positions. When the CTC is used, pilot symbols are allocated at the additional pilot positions for Ant #3 and Ant #4, after all steps.

Data mapping is carried for the O-FUSC permutation in the same manner as for the band AMC channel.

An example of the steps (5) to (8) for a system with four Tx antennas will be taken.

Parameters for the O-FUSC permutation are defined as

- CELL ID: 1
- pilot subcarrier positions=9k+1 (k=0, 1, 2, ...)
- subchannel index=0
- the number of subchannels=1.

According to the above parameters, the following subcarrier position table is presented for 48 data subcarriers in subchannel #0:
{3 23 46 58 79 104 121 132 156 170 196 215 231 245 254 273 293 316 328 349 374 391 402 426 440 466 485 501 515 524 543 563 586 598 619 644 661 672 696 710 736 755 771 785 794 813 833 856}.

Among the subcarrier indexes, additional pilot subcarrier positions are {245 254 515 524 785 794}.

When the CC is used, after data is mapped to the above 48 subcarriers, data are punctured at the additional pilot subcarrier positions. For Ant #3 and Ant #4, additional pilot symbols are allocated at the punctured subcarrier positions.

When the CTC is used, data truncation is required. Thus, the above subcarrier positions are changed, thereby creating a new subcarrier position table. The additional pilot subcarrier positions {245 254 515 524 785 794} are skipped and as many Null data as the number of the additional pilot subcarrier positions are added at the last of the table.

For the CTC, the data subcarrier position table except the additional pilot subcarrier positions is:
{3 23 46 58 79 104 121 132 156 170 196 215 231 273 293 316 328 349 374 391 402 426 440 466 485 501 543 563 586 598 619 644 661 672 696 710 736 755 771 813 833 856 Null Null Null Null Null Null}.

Null means shifting to the next subchannel without data allocation. That is, only 42 data among 48 data are allocated and the remaining data is allocated to the second subchannel. The number of Nulls may vary with parameters and thus it is preferable to define such tables as illustrated above for all parameters.

If the tables are prepared for all parameters (number of subchannels x pilot positions (3)), when the CTC is used and additional pilots are allocated, data mapping becomes easy.

A description will now be made of the configuration of a MIMO-OFDMA wireless communication system.

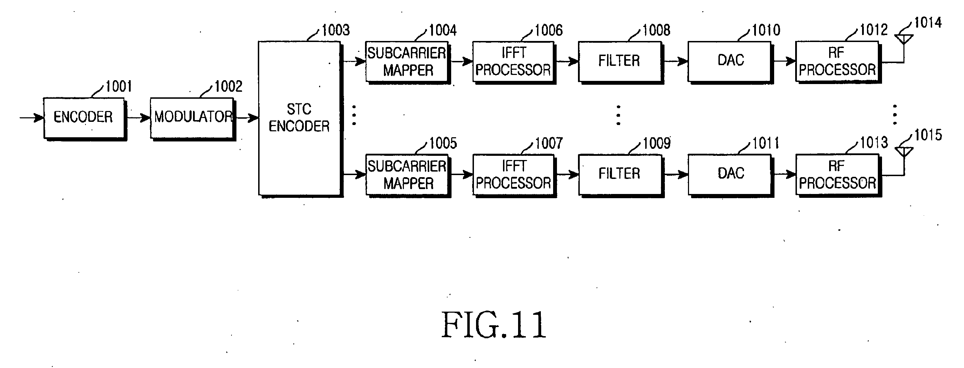

FIG. 11 is a block diagram of a transmitter in a MIMO-OFDMA wireless communication system according to the present invention. The transmitter is comprised of an encoder 1001, a modulator 1002, an STC encoder 1003, subcarrier mappers 1004 to 1005, Inverse Fast Fourier Transform (IFFT) processors 1006 to 1007, filters 1008 to 1009, Digital-to-Analog Converters (DACs) 1010 to 1011, Radio Frequency (RF) processors 1012 to 1013, and N (>1) Tx antennas 1014 to 1015.

In operation, the encoder 1001 encodes an input information bit stream at a predetermined coding rate. Given k information bits and a coding rate R, the number of code symbols is k/R. The encoder 1001 can be a convolutional encoder, a turbo encoder, or a Low Density Parity Check (LDPC) encoder.

The modulator 1002 generates complex symbols by mapping the code symbols received from the encoder 1001 to signal points in a predetermined modulation scheme. The modulation scheme can be BPSK, QPSK, 8QAM, 16QAM or 64QAM. One bit (s=1) is mapped to one signal point (complex signal) in BPSK, two bits (s=2) to one complex signal in QPSK, three bits (s=3) to one complex signal in 8QAM, four bits (s=4) to one complex signal in 16QAM, and six bits (s=6) to one complex signal in 64QAM.

The STC encoder 1003 encodes the complex symbols according to a predetermined STC coding matrix, thereby mapping them in the time-space-frequency domain. Symbols mapped to the first antenna are provided to the first subcarrier mapper 1004 and symbols mapped to the $N^{th}$ antenna are provided to the $N^{th}$ subcarrier mapper 1005.

The subcarrier mappers 1004 to 1005 map the received symbols to subcarriers and output the mapped symbols to corresponding IFFT processors. More specifically, the subcarrier mappers 1004 to 1005 output the received symbols to corresponding subcarrier positions of the IFFT processors in corresponding time intervals according to a mapping rule based on the coding matrix. They use lookup tables (e.g. FIGs. 6 to 9) or indexes generated in a predetermined rule in symbol mapping in the time-frequency domain.

The IFFT processors 1006 to 1007 generate time-domain samples data (i.e. an OFDM symbol) by IFFT-processing the symbols received from the corresponding subcarrier mappers 1004 to 1005.

The filters 1008 to 1009 band-pass-filter the sample data. The DACs 1010 to 1011 convert the filtered sample data to analog signals. The RF processors 1012 to 1013 process the analog signals to RF signals and transmit the RF signals through the corresponding Tx antennas 1014 to 1015.

As described above, the present invention allows for MIMO in an OFDMA wireless communication by proposing the method of mapping STC encoded data symbols to subcarriers. Particularly, STC encoded data symbols can be efficiently transmitted through a plurality of antennas on a band AMC subchannel compliant with IEEE 802.16e for multiple antennas.

While the invention has been shown and described with reference to certain embodiments thereof, it will be understood by those skilled in the art that various changes in form and details may be made therein without departing from the spirit and scope of the invention as defined by the appended claims.

**Claims**

1. A transmission method in a broadband wireless communication system using multiple antennas, comprising the steps of:

    encoding transmission data symbols according to a predetermined space-time coding matrix; and
    mapping the coded data symbols to subcarriers according to a mapping rule determined by the space-time coding matrix.

2. The transmission method of claim 1, wherein for the space-time coding matrix A = $\begin{bmatrix} s_0 & -s_1^* \\ s_1 & s_0^* \end{bmatrix}$, the mapping rule is that rows of the space-time coding matrix are mapped to transmit antennas, and in each predetermined transmission unit, the first column of the space-time coding matrix is mapped to an odd-numbered orthogonal frequency division multiplexing (OFDM) symbol and the second column of the space-time coding matrix is mapped to an even-numbered OFDM symbol.

3. The transmission method of claim 1, wherein for the space-time coding matrix $A == \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, the

mapping rule is that rows of the space-time coding matrix are mapped to the transmit antennas, and in each predetermined transmission unit, the first two columns of the space-time coding matrix are mapped to odd-numbered subcarriers, the second two columns of the space-time coding matrix are mapped to even-numbered subcarriers, the first and third columns of the space-time coding matrix are mapped to an odd-numbered OFDM symbol, and the second and fourth columns of the space-time coding matrix are mapped to an even-numbered OFDM symbol.

4. The transmission method of claim 1, wherein for the space-time coding matrix $C = \begin{bmatrix} s_0 \\ s_1 \end{bmatrix}$, the mapping rule is that the rows of the space-time coding matrix are mapped to transmit antennas.

5. The transmission method of claim 1, wherein for the space-time coding matrix is $A = \begin{bmatrix} s_0 & -s_1^* \\ s_1 & s_0^* \end{bmatrix}$, the mapping rule for a first transmit antenna is given as the following table:

| | | | | | |
|---|---|---|---|---|---|
| $s_0$ | $-s_1^*$ | $s_{32}$ | $-s_{33}^*$ | $s_{64}$ | $-s_{65}^*$ |
| PILOT | NULL | $s_{34}$ | $-s_{35}^*$ | $s_{66}$ | $-s_{67}^*$ |
| $s_2$ | $-s_3^*$ | $s_{36}$ | $-s_{37}^*$ | $s_{68}$ | $-s_{69}^*$ |
| $s_4$ | $-s_5^*$ | $s_{38}$ | $-s_{39}^*$ | $s_{70}$ | $-s_{71}^*$ |
| $s_6$ | $-s_7^*$ | $s_{40}$ | $-s_{41}^*$ | PILOT | NULL |
| $s_8$ | $-s_9^*$ | $s_{42}$ | $-s_{43}^*$ | $s_{72}$ | $-s_{73}^*$ |
| $s_{10}$ | $-s_{11}^*$ | $s_{44}$ | $-s_{45}^*$ | $s_{74}$ | $-s_{75}^*$ |
| $s_{12}$ | $-s_{13}^*$ | PILOT | NULL | $s_{76}$ | $-s_{77}^*$ |
| $s_{14}$ | $-s_{15}^*$ | $s_{46}$ | $-s_{47}^*$ | $s_{78}$ | $-s_{79}^*$ |
| $s_{16}$ | $-s_{17}^*$ | $s_{48}$ | $-s_{49}^*$ | $s_{80}$ | $-s_{81}^*$ |
| PILOT | NULL | $s_{50}$ | $-s_{51}^*$ | $s_{82}$ | $-s_{83}^*$ |
| $s_{18}$ | $-s_{19}^*$ | $s_{52}$ | $-s_{53}^*$ | $s_{84}$ | $-s_{85}^*$ |
| $s_{20}$ | $-s_{21}^*$ | $s_{54}$ | $-s_{55}^*$ | $s_{86}$ | $-s_{87}^*$ |
| $s_{22}$ | $-s_{23}^*$ | $s_{56}$ | $-s_{57}^*$ | PILOT | NULL |
| $s_{24}$ | $-s_{25}^*$ | $s_{58}$ | $-s_{59}^*$ | $s_{88}$ | $-s_{89}^*$ |
| $s_{26}$ | $-s_{27}^*$ | $s_{60}$ | $-s_{61}^*$ | $s_{90}$ | $-s_{91}^*$ |
| $s_{28}$ | $-s_{29}^*$ | PILOT | NULL | $s_{92}$ | $-s_{93}^*$ |
| $s_{30}$ | $-s_{31}^*$ | $s_{62}$ | $-s_{63}^*$ | $s_{94}$ | $-s_{95}^*$ |

| | |
|---|---|
| $s$ | DATA SUBCARRIER |
| PILOT | PILOT SUBCARRIER |
| NULL | NULL SUBCARRIER FOR ANT #2 PILOT |

6. The transmission method of claim 1, wherein for the space-time coding matrix $A = \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, the

mapping rule for a first transmit antenna is given as the following table:

| $s_0$ | $-s_1^*$ | $s_{28}$ | $-s_{29}^*$ | $s_{56}$ | $-s_{57}^*$ |
|---|---|---|---|---|---|
| PILOT | NULL | NULL | NULL | NULL | NULL |
| NULL | NULL | $s_{32}$ | $-s_{33}^*$ | $s_{60}$ | $-s_{61}^*$ |
| NULL | NULL | NULL | NULL | NULL | NULL |
| $s_4$ | $-s_5^*$ | $s_{36}$ | $-s_{37}^*$ | PILOT | NULL |
| NULL | NULL | NULL | NULL | NULL | NULL |
| $s_8$ | $-s_9^*$ | $s_{40}$ | $-s_{41}^*$ | $s_{64}$ | $-s_{65}^*$ |
| NULL | NULL | PILOT | NULL | NULL | NULL |
| $s_{12}$ | $-s_{13}^*$ | NULL | NULL | $s_{68}$ | $-s_{69}^*$ |
| NULL | NULL | NULL | NULL | NULL | NULL |
| PILOT | NULL | $s_{44}$ | $-s_{45}^*$ | $s_{72}$ | $-s_{73}^*$ |
| NULL | NULL | NULL | NULL | NULL | NULL |
| $s_{16}$ | $-s_{17}^*$ | $s_{48}$ | $-s_{49}^*$ | $s_{76}$ | $-s_{77}^*$ |
| NULL | NULL | NULL | NULL | PILOT | NULL |
| $s_{20}$ | $-s_{21}^*$ | $s_{52}$ | $-s_{53}^*$ | NULL | NULL |
| NULL | NULL | NULL | NULL | NULL | NULL |
| $s_{24}$ | $-s_{25}^*$ | PILOT | NULL | $s_{80}$ | $-s_{81}^*$ |
| NULL | NULL | NULL | NULL | NULL | NULL |

| | |
|---|---|
| $s$ | DATA SUBCARRIER |
| NULL | NULL SUBCARRIER FOR ANT #2,3 DATA |
| PILOT | PILOT SUBCARRIER |
| NULL | NULL SUBCARRIER FOR ANT #2,3,4 PILOT |

7. The transmission method of claim 1, wherein for the space-time coding matrix $A = \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, the

mapping rule for a first transmit antenna is given as the following table:

| $s_0$ | $-s_1^*$ | $s_{32}$ | $-s_{33}^*$ | $s_{64}$ | $-s_{65}^*$ |
|---|---|---|---|---|---|
| PILOT | NULL | NULL | NULL | NULL | NULL |
| NULL | NULL | $s_{36}$ | $-s_{37}^*$ | $s_{68}$ | $-s_{69}^*$ |
| $s_4$ | $-s_5^*$ | NULL | NULL | NULL | NULL |
| NULL | NULL | $s_{40}$ | $-s_{41}^*$ | PILOT | NULL |
| $s_8$ | $-s_9^*$ | NULL | NULL | NULL | NULL |
| NULL | NULL | $s_{44}$ | $-s_{45}^*$ | NULL | NULL |
| $s_{12}$ | $-s_{13}^*$ | PILOT | NULL | $s_{76}$ | $-s_{77}^*$ |
| NULL | NULL | NULL | NULL | NULL | NULL |
| $s_{16}$ | $-s_{17}^*$ | $s_{48}$ | $-s_{49}^*$ | $s_{80}$ | $-s_{81}^*$ |
| PILOT | NULL | NULL | NULL | NULL | NULL |
| NULL | NULL | $s_{52}$ | $-s_{53}^*$ | $s_{84}$ | $-s_{85}^*$ |
| $s_{20}$ | $-s_{21}^*$ | NULL | NULL | NULL | NULL |
| NULL | NULL | $s_{56}$ | $-s_{57}^*$ | PILOT | NULL |
| $s_{24}$ | $-s_{25}^*$ | NULL | NULL | NULL | NULL |
| NULL | NULL | $s_{60}$ | $-s_{61}^*$ | NULL | NULL |
| $s_{28}$ | $-s_{29}^*$ | PILOT | NULL | $s_{92}$ | $-s_{93}^*$ |
| NULL | NULL | NULL | NULL | NULL | NULL |

| | |
|---|---|
| $s$ | DATA SUBCARRIER |
| NULL | NULL SUBCARRIER FOR ANT #2,3 DATA |
| PILOT | PILOT SUBCARRIER |
| NULL | NULL SUBCARRIER FOR ANT #2,3,4 PILOT |

8. The transmission method of claim 1, wherein if the space-time coding matrix is C= $C = \begin{bmatrix} s_0 \\ s_1 \end{bmatrix}$, the mapping rule

for a first transmit antenna is given as the following table,

| $s_0$ | $s_{32}$ | $s_{64}$ | $s_{96}$ | $s_{128}$ | $s_{160}$ |
|---|---|---|---|---|---|
| PILOT | NULL | $s_{66}$ | $s_{98}$ | $s_{130}$ | $s_{162}$ |
| $s_2$ | $s_{34}$ | $s_{68}$ | $s_{100}$ | $s_{132}$ | $s_{164}$ |
| $s_4$ | $s_{36}$ | $s_{70}$ | $s_{102}$ | $s_{134}$ | $s_{166}$ |
| $s_6$ | $s_{38}$ | $s_{72}$ | $s_{104}$ | PILOT | NULL |
| $s_8$ | $s_{40}$ | $s_{74}$ | $s_{106}$ | $s_{136}$ | $s_{168}$ |
| $s_{10}$ | $s_{42}$ | $s_{76}$ | $s_{108}$ | $s_{138}$ | $s_{170}$ |
| $s_{12}$ | $s_{44}$ | PILOT | NULL | $s_{140}$ | $s_{172}$ |
| $s_{14}$ | $s_{46}$ | $s_{78}$ | $s_{110}$ | $s_{142}$ | $s_{174}$ |
| $s_{16}$ | $s_{48}$ | $s_{80}$ | $s_{112}$ | $s_{144}$ | $s_{176}$ |
| PILOT | NULL | $s_{82}$ | $s_{114}$ | $s_{146}$ | $s_{178}$ |
| $s_{18}$ | $s_{50}$ | $s_{84}$ | $s_{116}$ | $s_{148}$ | $s_{180}$ |
| $s_{20}$ | $s_{52}$ | $s_{86}$ | $s_{118}$ | $s_{150}$ | $s_{182}$ |
| $s_{22}$ | $s_{54}$ | $s_{88}$ | $s_{120}$ | PILOT | NULL |
| $s_{24}$ | $s_{56}$ | $s_{90}$ | $s_{122}$ | $s_{152}$ | $s_{184}$ |
| $s_{26}$ | $s_{58}$ | $s_{92}$ | $s_{124}$ | $s_{154}$ | $s_{186}$ |
| $s_{28}$ | $s_{60}$ | PILOT | NULL | $s_{156}$ | $s_{188}$ |
| $s_{30}$ | $s_{62}$ | $s_{94}$ | $s_{126}$ | $s_{158}$ | $s_{190}$ |

| s | DATA SUBCARRIER |
|---|---|
| PILOT | PILOT SUBCARRIER |
| NULL | NULL SUBCARRIER FOR ANT #2 PILOT |

9. The transmission method of claim 1, wherein for the space-time coding matrix $C = \begin{bmatrix} s_0 \\ s_1 \end{bmatrix}$, the mapping rule for a first transmit antenna is given as the following table:

| | | | | | |
|---|---|---|---|---|---|
| $S_0^0$ | $S_{16}^0$ | $S_{32}^0$ | $S_{48}^0$ | $S_{64}^0$ | $S_{80}^0$ |
| PILOT | NULL | $S_{33}^0$ | $S_{49}^0$ | $S_{65}^0$ | $S_{81}^0$ |
| $S_1^0$ | $S_{17}^0$ | $S_{34}^0$ | $S_{50}^0$ | $S_{66}^0$ | $S_{82}^0$ |
| $S_2^0$ | $S_{18}^0$ | $S_{35}^0$ | $S_{51}^0$ | $S_{67}^0$ | $S_{83}^0$ |
| $S_3^0$ | $S_{19}^0$ | $S_{36}^0$ | $S_{52}^0$ | PILOT | NULL |
| $S_4^0$ | $S_{20}^0$ | $S_{37}^0$ | $S_{53}^0$ | $S_{68}^0$ | $S_{84}^0$ |
| $S_5^0$ | $S_{21}^0$ | $S_{38}^0$ | $S_{54}^0$ | $S_{69}^0$ | $S_{85}^0$ |
| $S_6^0$ | $S_{22}^0$ | PILOT | NULL | $S_{70}^0$ | $S_{86}^0$ |
| $S_7^0$ | $S_{23}^0$ | $S_{39}^0$ | $S_{55}^0$ | $S_{71}^0$ | $S_{87}^0$ |
| $S_8^0$ | $S_{24}^0$ | $S_{40}^0$ | $S_{56}^0$ | $S_{72}^0$ | $S_{88}^0$ |
| PILOT | NULL | $S_{41}^0$ | $S_{57}^0$ | $S_{73}^0$ | $S_{89}^0$ |
| $S_9^0$ | $S_{25}^0$ | $S_{42}^0$ | $S_{58}^0$ | $S_{74}^0$ | $S_{90}^0$ |
| $S_{10}^0$ | $S_{26}^0$ | $S_{43}^0$ | $S_{59}^0$ | $S_{75}^0$ | $S_{91}^0$ |
| $S_{11}^0$ | $S_{27}^0$ | $S_{44}^0$ | $S_{60}^0$ | PILOT | NULL |
| $S_{12}^0$ | $S_{28}^0$ | $S_{45}^0$ | $S_{61}^0$ | $S_{76}^0$ | $S_{92}^0$ |
| $S_{13}^0$ | $S_{29}^0$ | $S_{46}^0$ | $S_{62}^0$ | $S_{77}^0$ | $S_{93}^0$ |
| $S_{14}^0$ | $S_{30}^0$ | PILOT | NULL | $S_{78}^0$ | $S_{94}^0$ |
| $S_{15}^0$ | $S_{31}^0$ | $S_{47}^0$ | $S_{63}^0$ | $S_{79}^0$ | $S_{95}^0$ |

| S | DATA SUBCARRIER |
|---|---|
| PILOT | PILOT SUBCARRIER |
| NULL | NULL SUBCARRIER FOR ANT #2 PILOT |

**10.** The transmission method of claim 1, wherein the mapping step comprises mapping the coded data symbols to the subcarners on a predetermined transmission unit basis.

**11.** The transmission method of claim 10, wherein the predetermined transmission unit is a slot including one of 2 bins x 6 OFDM symbols and 1 subchannel x 2 OFDM symbols.

**12.** The transmission method of claim 1, wherein the mapping step comprises mapping the coded data symbols to remaining subcarriers other than predetermined pilot subcarriers.

**13.** The transmission method of claim 1, wherein the mapping step comprises:

grouping the coded data symbols by antennas in the case of two transmit antennas;
sequentially mapping the grouped coded data symbols to remaining subcarriers other than predetermined pilot subcarrier positions for first and second transmit antennas for each transmit antenna on a predetermined slot basis; and
mapping pilot symbols to predetermined pilot subcarrier positions for the each transmit antenna.

**14.** The transmission method of claim 1, wherein the mapping step comprises:

grouping the coded data symbols by antennas in the case of four transmit antennas and a convolutional turbo code;
sequentially mapping the grouped coded data symbols to remaining subcarriers other than predetermined pilot subcarrier positions for first to fourth transmit antennas for each transmit antenna on a predetermined slot basis; and
mapping pilot symbols to predetermined pilot subcarrier positions for the each transmit antenna.

**15.** The transmission method of claim 1, wherein the mapping step comprises:

grouping the coded data symbols by antennas in the case of four transmit antennas and a convolutional code;
mapping the grouped coded data symbols to remaining subcarriers other than predetermined pilot subcarrier positions for first and second transmit antennas for each transmit antenna on a predetermined slot basis;
puncturing data symbols mapped to pilot subcarrier positions for third and fourth transmit antennas; and
mapping pilot symbols to predetermined pilot subcarrier positions for each transmit antenna.

**16.** A transmitter in a broadband wireless communication system using multiple antennas, comprising:

a space-time encoder for encoding transmission data symbols according to a predetermined space-time coding matrix; and

a mapper for mapping the coded data symbols received from the space-time encoder to subcarriers according to a mapping rule determined by the space-time coding matrix.

**17.** The transmitter of claim 16, wherein for the space-time coding matrix $A = \begin{bmatrix} s_0 & -s_1^* \\ s_1 & s_0^* \end{bmatrix}$, the mapping rule is that rows of the space-time coding matrix are mapped to transmit antennas, and in each predetermined transmission unit, the first column of the space-time coding matrix is mapped to an odd-numbered orthogonal frequency division multiplexing (OFDM) symbol and the second column of the space-time coding matrix is mapped to an even-numbered OFDM symbol.

**18.** The transmitter of claim 16, wherein for the space-time coding matrix $A = \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, , the mapping rule is that rows of the space-time coding matrix are mapped to transmit antennas, and in each predetermined transmission unit, the first two columns of the space-time coding matrix are mapped to odd-numbered subcarriers, the second two columns of the space-time coding matrix are mapped to even-numbered subcarriers, the first and third columns of the space-time coding matrix are mapped to an odd-numbered OFDM symbol, and the second and fourth columns of the space-time coding matrix are mapped to an even-numbered OFDM symbol.

**19.** The transmitter of claim 16, wherein for the space-time coding matrix $C = \begin{bmatrix} s_0 \\ s_1 \end{bmatrix}$, the mapping rule is that rows of the space-time coding matrix are mapped to the transmit antennas.

**20.** The transmitter method of claim 16, wherein for the space-time coding matrix $A = \begin{bmatrix} s_0 & -s_1^* \\ s_1 & s_0^* \end{bmatrix}$, the mapping rule for a first transmit antenna is given as the following table:

| | | | | | |
|---|---|---|---|---|---|
| $S_0$ | $-S_1^*$ | $S_{32}$ | $-S_{33}^*$ | $S_{64}$ | $-S_{65}^*$ |
| PILOT | NULL | $S_{34}$ | $-S_{35}^*$ | $S_{66}$ | $-S_{67}^*$ |
| $S_2$ | $-S_3^*$ | $S_{36}$ | $-S_{37}^*$ | $S_{68}$ | $-S_{69}^*$ |
| $S_4$ | $-S_5^*$ | $S_{38}$ | $-S_{39}^*$ | $S_{70}$ | $-S_{71}^*$ |
| $S_6$ | $-S_7^*$ | $S_{40}$ | $-S_{41}^*$ | PILOT | NULL |
| $S_8$ | $-S_9^*$ | $S_{42}$ | $-S_{43}^*$ | $S_{72}$ | $-S_{73}^*$ |
| $S_{10}$ | $-S_{11}^*$ | $S_{44}$ | $-S_{45}^*$ | $S_{74}$ | $-S_{75}^*$ |
| $S_{12}$ | $-S_{13}^*$ | PILOT | NULL | $S_{76}$ | $-S_{77}^*$ |
| $S_{14}$ | $-S_{15}^*$ | $S_{46}$ | $-S_{47}^*$ | $S_{78}$ | $-S_{79}^*$ |
| $S_{16}$ | $-S_{17}^*$ | $S_{48}$ | $-S_{49}^*$ | $S_{80}$ | $-S_{81}^*$ |
| PILOT | NULL | $S_{50}$ | $-S_{51}^*$ | $S_{82}$ | $-S_{83}^*$ |
| $S_{18}$ | $-S_{19}^*$ | $S_{52}$ | $-S_{53}^*$ | $S_{84}$ | $-S_{85}^*$ |
| $S_{20}$ | $-S_{21}^*$ | $S_{54}$ | $-S_{55}^*$ | $S_{86}$ | $-S_{87}^*$ |
| $S_{22}$ | $-S_{23}^*$ | $S_{56}$ | $-S_{57}^*$ | PILOT | NULL |
| $S_{24}$ | $-S_{25}^*$ | $S_{58}$ | $-S_{59}^*$ | $S_{88}$ | $-S_{89}^*$ |
| $S_{26}$ | $-S_{27}^*$ | $S_{60}$ | $-S_{61}^*$ | $S_{90}$ | $-S_{91}^*$ |
| $S_{28}$ | $-S_{29}^*$ | PILOT | NULL | $S_{92}$ | $-S_{93}^*$ |
| $S_{30}$ | $-S_{31}^*$ | $S_{62}$ | $-S_{63}^*$ | $S_{94}$ | $-S_{95}^*$ |

- □ S  DATA SUBCARRIER
- ▨ PILOT  PILOT SUBCARRIER
- ▨ NULL  NULL SUBCARRIER FOR ANT #2 PILOT

21. The transmitter of claim 16, wherein for the space-time coding matrix $A = \begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, the mapping rule for a first transmit antenna is given as the following table:

| | | | | | |
|---|---|---|---|---|---|
| $S_0$ | $-S_1^*$ | $S_{28}$ | $-S_{29}^*$ | $S_{56}$ | $-S_{57}^*$ |
| PILOT | NULL | NULL | NULL | NULL | NULL |
| NULL | NULL | $S_{32}$ | $-S_{33}^*$ | $S_{60}$ | $-S_{61}^*$ |
| NULL | NULL | NULL | NULL | NULL | NULL |
| $S_4$ | $-S_5^*$ | $S_{36}$ | $-S_{37}^*$ | PILOT | NULL |
| NULL | NULL | NULL | NULL | NULL | NULL |
| $S_8$ | $-S_9^*$ | $S_{40}$ | $-S_{41}^*$ | $S_{64}$ | $-S_{65}^*$ |
| NULL | NULL | PILOT | NULL | NULL | NULL |
| $S_{12}$ | $-S_{13}^*$ | NULL | NULL | $S_{68}$ | $-S_{69}^*$ |
| NULL | NULL | NULL | NULL | NULL | NULL |
| PILOT | NULL | $S_{44}$ | $-S_{45}^*$ | $S_{72}$ | $-S_{73}^*$ |
| NULL | NULL | NULL | NULL | NULL | NULL |
| $S_{16}$ | $-S_{17}^*$ | $S_{48}$ | $-S_{49}^*$ | $S_{76}$ | $-S_{77}^*$ |
| NULL | NULL | NULL | NULL | PILOT | NULL |
| $S_{20}$ | $-S_{21}^*$ | $S_{52}$ | $-S_{53}^*$ | NULL | NULL |
| NULL | NULL | NULL | NULL | NULL | NULL |
| $S_{24}$ | $-S_{25}^*$ | PILOT | NULL | $S_{80}$ | $-S_{81}^*$ |
| NULL | NULL | NULL | NULL | NULL | NULL |

- □ S  DATA SUBCARRIER
- □ NULL  NULL SUBCARRIER FOR ANT #2,3 DATA
- ▨ PILOT  PILOT SUBCARRIER
- ▨ NULL  NULL SUBCARRIER FOR ANT #2,3,4 PILOT

**22.** The transmitter of claim 16, wherein for the space-time coding matrix $A=\begin{bmatrix} s_0 & -s_1^* & 0 & 0 \\ s_1 & s_0^* & 0 & 0 \\ 0 & 0 & s_2 & -s_3^* \\ 0 & 0 & s_3 & s_2^* \end{bmatrix}$, the mapping rule for a first transmit antenna is given as the following table:

| $s_0$ | $-s_1^*$ | $s_{32}$ | $-s_{33}^*$ | $s_{64}$ | $-s_{65}^*$ |
|---|---|---|---|---|---|
| PILOT | NULL | NULL | NULL | NULL | NULL |
| NULL | NULL | $s_{36}$ | $-s_{37}^*$ | $s_{68}$ | $-s_{69}^*$ |
| $s_4$ | $-s_5^*$ | NULL | NULL | NULL | NULL |
| NULL | NULL | $s_{40}$ | $-s_{41}^*$ | PILOT | NULL |
| $s_8$ | $-s_9^*$ | NULL | NULL | NULL | NULL |
| NULL | NULL | $s_{44}$ | $-s_{45}^*$ | NULL | NULL |
| $s_{12}$ | $-s_{13}^*$ | PILOT | NULL | $s_{76}$ | $-s_{77}^*$ |
| NULL | NULL | NULL | NULL | NULL | NULL |
| $s_{16}$ | $-s_{17}^*$ | $s_{48}$ | $-s_{49}^*$ | $s_{80}$ | $-s_{81}^*$ |
| PILOT | NULL | NULL | NULL | NULL | NULL |
| NULL | NULL | $s_{52}$ | $-s_{53}^*$ | $s_{84}$ | $-s_{85}^*$ |
| $s_{20}$ | $-s_{21}^*$ | NULL | NULL | NULL | NULL |
| NULL | NULL | $s_{56}$ | $-s_{57}^*$ | PILOT | NULL |
| $s_{24}$ | $-s_{25}^*$ | NULL | NULL | NULL | NULL |
| NULL | NULL | $s_{60}$ | $-s_{61}^*$ | NULL | NULL |
| $s_{28}$ | $-s_{29}^*$ | PILOT | NULL | $s_{92}$ | $-s_{93}^*$ |
| NULL | NULL | NULL | NULL | NULL | NULL |

| | |
|---|---|
| $s$ | DATA SUBCARRIER |
| NULL | NULL SUBCARRIER FOR ANT #2,3 DATA |
| PILOT | PILOT SUBCARRIER |
| NULL | NULL SUBCARRIER FOR ANT #2,3,4 PILOT |

**23.** The transmitter of claim 16, wherein for the space-time coding matrix $C=\begin{bmatrix} s_0 \\ s_1 \end{bmatrix}$, the mapping rule for a first transmit antenna is given as the following table:

| $S_0$ | $S_{32}$ | $S_{64}$ | $S_{96}$ | $S_{128}$ | $S_{160}$ |
|---|---|---|---|---|---|
| PILOT | NULL | $S_{66}$ | $S_{98}$ | $S_{130}$ | $S_{162}$ |
| $S_2$ | $S_{34}$ | $S_{68}$ | $S_{100}$ | $S_{132}$ | $S_{164}$ |
| $S_4$ | $S_{36}$ | $S_{70}$ | $S_{102}$ | $S_{134}$ | $S_{166}$ |
| $S_6$ | $S_{38}$ | $S_{72}$ | $S_{104}$ | PILOT | NULL |
| $S_8$ | $S_{40}$ | $S_{74}$ | $S_{106}$ | $S_{136}$ | $S_{168}$ |
| $S_{10}$ | $S_{42}$ | $S_{76}$ | $S_{108}$ | $S_{138}$ | $S_{170}$ |
| $S_{12}$ | $S_{44}$ | PILOT | NULL | $S_{140}$ | $S_{172}$ |
| $S_{14}$ | $S_{46}$ | $S_{78}$ | $S_{110}$ | $S_{142}$ | $S_{174}$ |
| $S_{16}$ | $S_{48}$ | $S_{80}$ | $S_{112}$ | $S_{144}$ | $S_{176}$ |
| PILOT | NULL | $S_{82}$ | $S_{114}$ | $S_{146}$ | $S_{178}$ |
| $S_{18}$ | $S_{50}$ | $S_{84}$ | $S_{116}$ | $S_{148}$ | $S_{180}$ |
| $S_{20}$ | $S_{52}$ | $S_{86}$ | $S_{118}$ | $S_{150}$ | $S_{182}$ |
| $S_{22}$ | $S_{54}$ | $S_{88}$ | $S_{120}$ | PILOT | NULL |
| $S_{24}$ | $S_{56}$ | $S_{90}$ | $S_{122}$ | $S_{152}$ | $S_{184}$ |
| $S_{26}$ | $S_{58}$ | $S_{92}$ | $S_{124}$ | $S_{154}$ | $S_{186}$ |
| $S_{28}$ | $S_{60}$ | PILOT | NULL | $S_{156}$ | $S_{188}$ |
| $S_{30}$ | $S_{62}$ | $S_{94}$ | $S_{126}$ | $S_{158}$ | $S_{190}$ |

| S | DATA SUBCARRIER |
|---|---|
| PILOT | PILOT SUBCARRIER |
| NULL | NULL SUBCARRIER FOR ANT #2 PILOT |

24. The transmitter of claim 16, wherein for the space-time coding matrix $C = \begin{bmatrix} s_0 \\ s_1 \end{bmatrix}$, the mapping rule for a first transmit antenna is given as the following table:

| $S^0_0$ | $S^0_{16}$ | $S^0_{32}$ | $S^0_{48}$ | $S^0_{64}$ | $S^0_{80}$ |
|---|---|---|---|---|---|
| PILOT | NULL | $S^0_{33}$ | $S^0_{49}$ | $S^0_{65}$ | $S^0_{81}$ |
| $S^0_1$ | $S^0_{17}$ | $S^0_{34}$ | $S^0_{50}$ | $S^0_{66}$ | $S^0_{62}$ |
| $S^0_2$ | $S^0_{18}$ | $S^0_{35}$ | $S^0_{51}$ | $S^0_{67}$ | $S^0_{63}$ |
| $S^0_3$ | $S^0_{19}$ | $S^0_{36}$ | $S^0_{52}$ | PILOT | NULL |
| $S^0_4$ | $S^0_{20}$ | $S^0_{37}$ | $S^0_{53}$ | $S^0_{68}$ | $S^0_{84}$ |
| $S^0_5$ | $S^0_{21}$ | $S^0_{38}$ | $S^0_{54}$ | $S^0_{69}$ | $S^0_{85}$ |
| $S^0_6$ | $S^0_{22}$ | PILOT | NULL | $S^0_{70}$ | $S^0_{86}$ |
| $S^0_7$ | $S^0_{23}$ | $S^0_{39}$ | $S^0_{55}$ | $S^0_{71}$ | $S^0_{87}$ |
| $S^0_8$ | $S^0_{24}$ | $S^0_{40}$ | $S^0_{56}$ | $S^0_{72}$ | $S^0_{88}$ |
| PILOT | NULL | $S^0_{41}$ | $S^0_{57}$ | $S^0_{73}$ | $S^0_{89}$ |
| $S^0_9$ | $S^0_{25}$ | $S^0_{42}$ | $S^0_{58}$ | $S^0_{74}$ | $S^0_{90}$ |
| $S^0_{10}$ | $S^0_{26}$ | $S^0_{43}$ | $S^0_{59}$ | $S^0_{75}$ | $S^0_{91}$ |
| $S^0_{11}$ | $S^0_{27}$ | $S^0_{44}$ | $S^0_{60}$ | PILOT | NULL |
| $S^0_{12}$ | $S^0_{28}$ | $S^0_{45}$ | $S^0_{61}$ | $S^0_{76}$ | $S^0_{92}$ |
| $S^0_{13}$ | $S^0_{29}$ | $S^0_{46}$ | $S^0_{62}$ | $S^0_{77}$ | $S^0_{93}$ |
| $S^0_{14}$ | $S^0_{30}$ | PILOT | NULL | $S^0_{78}$ | $S^0_{94}$ |
| $S^0_{15}$ | $S^0_{31}$ | $S^0_{47}$ | $S^0_{63}$ | $S^0_{79}$ | $S^0_{95}$ |

| S | DATA SUBCARRIER |
|---|---|
| PILOT | PILOT SUBCARRIER |
| NULL | NULL SUBCARRIER FOR ANT #2 PILOT |

25. The transmitter of claim 16, wherein the mapper maps the coded data symbols to the subcarriers on a predetermined transmission unit basis.

26. The transmitter of claim 25, wherein the predetermined transmission unit is a slot including one of 2 bins x 6 OFDM symbols and 1 subchannel x 2 OFDM symbols.

27. The transmitter of claim 16, wherein the mapper maps the coded data symbols to remaining subcarriers other than predetermined pilot subcarriers.

28. The transmitter of claim 16, wherein for four transmit antennas, the mapper maps the coded data symbols to remaining subcarriers other than predetermined pilot subcarrier positions for first and second transmit antennas and punctures data symbols mapped to pilot subcarrier positions for third and fourth transmit antennas, for pilot transmission.

FIG.1

(PRIOR ART)

FIG.2

(PRIOR ART)

EP 1 701 464 A1

SPATIAL
MULTIPLEXING

FIG.3
(PRIOR ART)

401 ∼ [///] PILOT FOR ANT #1

[▓▓] SHIFTED PILOT FOR ANT #2

401 ∼ [▓▓] ORIGINAL PILOT FOR ANT #1

# FIG.4

| | PILOT FOR ANT #1 |
| | PILOT FOR ANT #2 |
| | PUNCTURED PILOT FOR ANT #3 |
| | PUNCTURED PILOT FOR ANT #4 |

FIG.5

| | | | | | |
|---|---|---|---|---|---|
| $S_0$ | $-S_1^*$ | $S_{32}$ | $-S_{33}^*$ | $S_{64}$ | $-S_{65}^*$ |
| PILOT | NULL | $S_{34}$ | $-S_{35}^*$ | $S_{66}$ | $-S_{67}^*$ |
| $S_2$ | $-S_3^*$ | $S_{36}$ | $-S_{37}^*$ | $S_{68}$ | $-S_{69}^*$ |
| $S_4$ | $-S_5^*$ | $S_{38}$ | $-S_{39}^*$ | $S_{70}$ | $-S_{71}^*$ |
| $S_6$ | $-S_7^*$ | $S_{40}$ | $-S_{41}^*$ | PILOT | NULL |
| $S_8$ | $-S_9^*$ | $S_{42}$ | $-S_{43}^*$ | $S_{72}$ | $-S_{73}^*$ |
| $S_{10}$ | $-S_{11}^*$ | $S_{44}$ | $-S_{45}^*$ | $S_{74}$ | $-S_{75}^*$ |
| $S_{12}$ | $-S_{13}^*$ | PILOT | NULL | $S_{76}$ | $-S_{77}^*$ |
| $S_{14}$ | $-S_{15}^*$ | $S_{46}$ | $-S_{47}^*$ | $S_{78}$ | $-S_{79}^*$ |
| $S_{16}$ | $-S_{17}^*$ | $S_{48}$ | $-S_{49}^*$ | $S_{80}$ | $-S_{81}^*$ |
| PILOT | NULL | $S_{50}$ | $-S_{51}^*$ | $S_{82}$ | $-S_{83}^*$ |
| $S_{18}$ | $-S_{19}^*$ | $S_{52}$ | $-S_{53}^*$ | $S_{84}$ | $-S_{85}^*$ |
| $S_{20}$ | $-S_{21}^*$ | $S_{54}$ | $-S_{55}^*$ | $S_{86}$ | $-S_{87}^*$ |
| $S_{22}$ | $-S_{23}^*$ | $S_{56}$ | $-S_{57}^*$ | PILOT | NULL |
| $S_{24}$ | $-S_{25}^*$ | $S_{58}$ | $-S_{59}^*$ | $S_{88}$ | $-S_{89}^*$ |
| $S_{26}$ | $-S_{27}^*$ | $S_{60}$ | $-S_{61}^*$ | $S_{90}$ | $-S_{91}^*$ |
| $S_{28}$ | $-S_{29}^*$ | PILOT | NULL | $S_{92}$ | $-S_{93}^*$ |
| $S_{30}$ | $-S_{31}^*$ | $S_{62}$ | $-S_{63}^*$ | $S_{94}$ | $-S_{95}^*$ |

| | |
|---|---|
| $S$ | DATA SUBCARRIER |
| PILOT | PILOT SUBCARRIER |
| NULL | NULL SUBCARRIER FOR ANT #2 PILOT |

# FIG.6

| | | | | | |
|---|---|---|---|---|---|
| $S_0$ | $-S_1^*$ | $S_{28}$ | $-S_{29}^*$ | $S_{56}$ | $-S_{57}^*$ |
| PILOT | NULL | NULL | NULL | NULL | NULL |
| NULL | NULL | $S_{32}$ | $-S_{33}^*$ | $S_{60}$ | $-S_{61}^*$ |
| NULL | NULL | NULL | NULL | NULL | NULL |
| $S_4$ | $-S_5^*$ | $S_{36}$ | $-S_{37}^*$ | PILOT | NULL |
| NULL | NULL | NULL | NULL | NULL | NULL |
| $S_8$ | $-S_9^*$ | $S_{40}$ | $-S_{41}^*$ | $S_{64}$ | $-S_{65}^*$ |
| NULL | NULL | PILOT | NULL | NULL | NULL |
| $S_{12}$ | $-S_{13}^*$ | NULL | NULL | $S_{68}$ | $-S_{69}^*$ |
| NULL | NULL | NULL | NULL | NULL | NULL |
| PILOT | NULL | $S_{44}$ | $-S_{45}^*$ | $S_{72}$ | $-S_{73}^*$ |
| NULL | NULL | NULL | NULL | NULL | NULL |
| $S_{16}$ | $-S_{17}^*$ | $S_{48}$ | $-S_{49}^*$ | $S_{76}$ | $-S_{77}^*$ |
| NULL | NULL | NULL | NULL | PILOT | NULL |
| $S_{20}$ | $-S_{21}^*$ | $S_{52}$ | $-S_{53}^*$ | NULL | NULL |
| NULL | NULL | NULL | NULL | NULL | NULL |
| $S_{24}$ | $-S_{25}^*$ | PILOT | NULL | $S_{80}$ | $-S_{81}^*$ |
| NULL | NULL | NULL | NULL | NULL | NULL |

| | |
|---|---|
| S | DATA SUBCARRIER |
| NULL | NULL SUBCARRIER FOR ANT #2,3 DATA |
| PILOT | PILOT SUBCARRIER |
| NULL | NULL SUBCARRIER FOR ANT #2,3,4 PILOT |

## FIG.7

| | | | | | |
|---|---|---|---|---|---|
| $s_0$ | $-s_1^*$ | $s_{32}$ | $-s_{33}^*$ | $s_{64}$ | $-s_{65}^*$ |
| PILOT | NULL | NULL | NULL | NULL | NULL |
| NULL | NULL | $s_{36}$ | $-s_{37}^*$ | $s_{68}$ | $-s_{69}^*$ |
| $s_4$ | $-s_5^*$ | NULL | NULL | NULL | NULL |
| NULL | NULL | $s_{40}$ | $-s_{41}^*$ | PILOT | NULL |
| $s_8$ | $-s_9^*$ | NULL | NULL | NULL | NULL |
| NULL | NULL | $s_{44}$ | $-s_{45}^*$ | NULL | NULL |
| $s_{12}$ | $-s_{13}^*$ | PILOT | NULL | $s_{76}$ | $-s_{77}^*$ |
| NULL | NULL | NULL | NULL | NULL | NULL |
| $s_{16}$ | $-s_{17}^*$ | $s_{48}$ | $-s_{49}^*$ | $s_{80}$ | $-s_{81}^*$ |
| PILOT | NULL | NULL | NULL | NULL | NULL |
| NULL | NULL | $s_{52}$ | $-s_{53}^*$ | $s_{84}$ | $-s_{85}^*$ |
| $s_{20}$ | $-s_{21}^*$ | NULL | NULL | NULL | NULL |
| NULL | NULL | $s_{56}$ | $-s_{57}^*$ | PILOT | NULL |
| $s_{24}$ | $-s_{25}^*$ | NULL | NULL | NULL | NULL |
| NULL | NULL | $s_{60}$ | $-s_{61}^*$ | NULL | NULL |
| $s_{28}$ | $-s_{29}^*$ | PILOT | NULL | $s_{92}$ | $-s_{93}^*$ |
| NULL | NULL | NULL | NULL | NULL | NULL |

| Symbol | Description |
|---|---|
| s | DATA SUBCARRIER |
| NULL | NULL SUBCARRIER FOR ANT #2,3 DATA |
| PILOT | PILOT SUBCARRIER |
| NULL | NULL SUBCARRIER FOR ANT #2,3,4 PILOT |

# FIG.8

26

| S$_0$ | S$_{32}$ | S$_{64}$ | S$_{96}$ | S$_{128}$ | S$_{160}$ |
|---|---|---|---|---|---|
| PILOT | NULL | S$_{66}$ | S$_{98}$ | S$_{130}$ | S$_{162}$ |
| S$_2$ | S$_{34}$ | S$_{68}$ | S$_{100}$ | S$_{132}$ | S$_{164}$ |
| S$_4$ | S$_{36}$ | S$_{70}$ | S$_{102}$ | S$_{134}$ | S$_{166}$ |
| S$_6$ | S$_{38}$ | S$_{72}$ | S$_{104}$ | PILOT | NULL |
| S$_8$ | S$_{40}$ | S$_{74}$ | S$_{106}$ | S$_{136}$ | S$_{168}$ |
| S$_{10}$ | S$_{42}$ | S$_{76}$ | S$_{108}$ | S$_{138}$ | S$_{170}$ |
| S$_{12}$ | S$_{44}$ | PILOT | NULL | S$_{140}$ | S$_{172}$ |
| S$_{14}$ | S$_{46}$ | S$_{78}$ | S$_{110}$ | S$_{142}$ | S$_{174}$ |
| S$_{16}$ | S$_{48}$ | S$_{80}$ | S$_{112}$ | S$_{144}$ | S$_{176}$ |
| PILOT | NULL | S$_{82}$ | S$_{114}$ | S$_{146}$ | S$_{178}$ |
| S$_{18}$ | S$_{50}$ | S$_{84}$ | S$_{116}$ | S$_{148}$ | S$_{180}$ |
| S$_{20}$ | S$_{52}$ | S$_{86}$ | S$_{118}$ | S$_{150}$ | S$_{182}$ |
| S$_{22}$ | S$_{54}$ | S$_{88}$ | S$_{120}$ | PILOT | NULL |
| S$_{24}$ | S$_{56}$ | S$_{90}$ | S$_{122}$ | S$_{152}$ | S$_{184}$ |
| S$_{26}$ | S$_{58}$ | S$_{92}$ | S$_{124}$ | S$_{154}$ | S$_{186}$ |
| S$_{28}$ | S$_{60}$ | PILOT | NULL | S$_{156}$ | S$_{188}$ |
| S$_{30}$ | S$_{62}$ | S$_{94}$ | S$_{126}$ | S$_{158}$ | S$_{190}$ |

| S | DATA SUBCARRIER |
|---|---|
| PILOT | PILOT SUBCARRIER |
| NULL | NULL SUBCARRIER FOR ANT #2 PILOT |

# FIG.9

| | | | | | |
|---|---|---|---|---|---|
| $S_0^0$ | $S_{16}^0$ | $S_{32}^0$ | $S_{48}^0$ | $S_{64}^0$ | $S_{80}^0$ |
| PILOT | NULL | $S_{33}^0$ | $S_{49}^0$ | $S_{65}^0$ | $S_{81}^0$ |
| $S_1^0$ | $S_{17}^0$ | $S_{34}^0$ | $S_{50}^0$ | $S_{66}^0$ | $S_{82}^0$ |
| $S_2^0$ | $S_{18}^0$ | $S_{35}^0$ | $S_{51}^0$ | $S_{67}^0$ | $S_{83}^0$ |
| $S_3^0$ | $S_{19}^0$ | $S_{36}^0$ | $S_{52}^0$ | PILOT | NULL |
| $S_4^0$ | $S_{20}^0$ | $S_{37}^0$ | $S_{53}^0$ | $S_{68}^0$ | $S_{84}^0$ |
| $S_5^0$ | $S_{21}^0$ | $S_{38}^0$ | $S_{54}^0$ | $S_{69}^0$ | $S_{85}^0$ |
| $S_6^0$ | $S_{22}^0$ | PILOT | NULL | $S_{70}^0$ | $S_{86}^0$ |
| $S_7^0$ | $S_{23}^0$ | $S_{39}^0$ | $S_{55}^0$ | $S_{71}^0$ | $S_{87}^0$ |
| $S_8^0$ | $S_{24}^0$ | $S_{40}^0$ | $S_{56}^0$ | $S_{72}^0$ | $S_{88}^0$ |
| PILOT | NULL | $S_{41}^0$ | $S_{57}^0$ | $S_{73}^0$ | $S_{89}^0$ |
| $S_9^0$ | $S_{25}^0$ | $S_{42}^0$ | $S_{58}^0$ | $S_{74}^0$ | $S_{90}^0$ |
| $S_{10}^0$ | $S_{26}^0$ | $S_{43}^0$ | $S_{59}^0$ | $S_{75}^0$ | $S_{91}^0$ |
| $S_{11}^0$ | $S_{27}^0$ | $S_{44}^0$ | $S_{60}^0$ | PILOT | NULL |
| $S_{12}^0$ | $S_{28}^0$ | $S_{45}^0$ | $S_{61}^0$ | $S_{76}^0$ | $S_{92}^0$ |
| $S_{13}^0$ | $S_{29}^0$ | $S_{46}^0$ | $S_{62}^0$ | $S_{77}^0$ | $S_{93}^0$ |
| $S_{14}^0$ | $S_{30}^0$ | PILOT | NULL | $S_{78}^0$ | $S_{94}^0$ |
| $S_{15}^0$ | $S_{31}^0$ | $S_{47}^0$ | $S_{63}^0$ | $S_{79}^0$ | $S_{95}^0$ |

| S | DATA SUBCARRIER |
|---|---|
| PILOT | PILOT SUBCARRIER |
| NULL | NULL SUBCARRIER FOR ANT #2 PILOT |

# FIG.10

EP 1 701 464 A1

```
                                                              ┌──1003    ┌─1004      ┌─1006       ┌─1008      ┌─1010      ┌──1012  ╲1014
                                                              │          │SUBCARRIER │ IFFT       │           │           │  RF    ▽
                                                              │          │  MAPPER   │PROCESSOR   │ FILTER    │   DAC     │PROCESSOR│
                                                              │          └───────────└──────────  └────────   └────────   └────────
              ┌──1001       ┌──1002          ┌─────────┐      │ •              •
              │ ENCODER │   │MODULATOR│      │   STC   │      │ •              •                                                  •
  ──▶ │ENCODER│ ──▶ │MODULATOR│ ──▶ │ ENCODER │ ──▶ │ •              •                                                  •
              └────────      └─────────      │         │      │
                                             └─────────┘      │  ┌─1005      ┌─1007       ┌─1009      ┌─1011       ┌──1013  ╲1015
                                                              │  │SUBCARRIER │ IFFT       │          │           │  RF     ▽
                                                              └─▶│  MAPPER   │PROCESSOR   │ FILTER   │   DAC     │PROCESSOR│
                                                                 └───────────└──────────  └────────   └────────   └────────
```

# FIG.11

## EUROPEAN SEARCH REPORT

**European Patent Office**

Application Number

EP 06 00 4769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/073275 A (DOCOMO COMMUNICATIONS LABORATORIES EUROPE GMBH; BAUCH, GERHARD) 26 August 2004 (2004-08-26) | 1,10,11, 14-16, 25,26 | INV. H04L1/06 H04L27/26 |
| Y | * page 19, line 11 - last line * | 3,6,7, 18,21,22 | |
| Y | * page 26, line 14 - line 19 * <br> * page 27, line 23 - line 25 * <br> * page 28, line 3 - line 10 * <br> * page 29, line 1 - line 3 * <br> * page 29, line 15 - line 17 * <br> ----- | 13,28 | |
| X | US 2004/022183 A1 (LI KUO HUI ET AL) 5 February 2004 (2004-02-05) <br><br> * paragraph [0022] - paragraph [0028]; figure 1 * <br> ----- | 1,2,10, 11, 14-17, 25,26 | |
| X | US 2003/095533 A1 (JOO PAN-YUH ET AL) 22 May 2003 (2003-05-22) | 1,2,10, 11, 14-17, 25,26 | TECHNICAL FIELDS SEARCHED (IPC) |
| Y | * paragraph [0013] - paragraph [0014]; figure 1 * <br> * paragraph [0026] * <br> ----- | 5,12,20, 27 | H04L |
| Y | US 2004/233838 A1 (SUDO HIROAKI ET AL) 25 November 2004 (2004-11-25) | 5,12,20, 27 | |
| Y | * paragraph [0134]; figure 13 * <br><br> * paragraph [0029] - paragraph [0031] * <br> ----- | 8,9,23, 24 | |
| A | US 2003/072395 A1 (JIA MING ET AL) 17 April 2003 (2003-04-17) <br> * paragraph [0104] - paragraph [0105]; figure 10 * <br> ----- <br><br> -/-- | 5,12,20, 27 | |

The present search report has been drawn up for all claims

| Place of search | Date of completion of the search | Examiner |
|---|---|---|
| Munich | 24 July 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 4769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2003/067993 A1 (VISWANATHAN HARISH) 10 April 2003 (2003-04-10) | 3,18 | |
| Y | * paragraph [0042] * | 6,7,21, 22 | |
| A | WO 03/056742 A (HOTTINEN, ARI; TIRKKONEN, OLAV) 10 July 2003 (2003-07-10) * page 4, equation 3 * | 3,6,7, 18,21,22 | |
| X | TAIWEN TANG ET AL: "A space-time FIR equalizer training algorithm for MIMO-OFDM systems" SIGNAL PROCESSING AND COMMUNICATIONS, 2004. SPCOM '04. 2004 INTERNATIONAL CONFERENCE ON BANGALORE, INDIA 11-14 DEC. 2004, PISCATAWAY, NJ, USA,IEEE, 11 December 2004 (2004-12-11), pages 550-554, XP010810487 ISBN: 0-7803-8674-4 | 4,19 | |
| Y | * page 550, right-hand column, last paragraph - page 551, left-hand column, paragraph 1; figure 1 * | 8,9,23, 24 | TECHNICAL FIELDS SEARCHED (IPC) |
| X | JAEKYUN MOON ET AL: "Channel estimation for MIMO-OFDM systems employing spatial multiplexing" VEHICULAR TECHNOLOGY CONFERENCE, 2004. VTC2004-FALL. 2004 IEEE 60TH LOS ANGELES, CA, USA 26-29 SEPT. 2004, PISCATAWAY, NJ, USA,IEEE, 26 September 2004 (2004-09-26), pages 3649-3654, XP010787557 ISBN: 0-7803-8521-7 * page 3651, left-hand column, paragraph 6 - paragraph 9; figure 1 * | 4,19 | |

-/--

The present search report has been drawn up for all claims

| Place of search | Date of completion of the search | Examiner |
|---|---|---|
| Munich | 24 July 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 00 4769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ZUMMO S A ET AL: "Error probability of coded multi-antenna systems in block fading environments" COMMUNICATIONS, 2004 IEEE INTERNATIONAL CONFERENCE ON PARIS, FRANCE 20-24 JUNE 2004, PISCATAWAY, NJ, USA,IEEE, 20 June 2004 (2004-06-20), pages 937-941, XP010710074 ISBN: 0-7803-8533-0 * page 940, right-hand column, last paragraph * ----- | 13,28 | |
| | | | TECHNICAL FIELDS SEARCHED (IPC) |

The present search report has been drawn up for all claims

| Place of search | Date of completion of the search | Examiner |
|---|---|---|
| Munich | 24 July 2006 | Agudo Cortada, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

European Patent

Office

Application Number

EP 06 00 4769

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

**European Patent Office**

**LACK OF UNITY OF INVENTION**
**SHEET B**

Application Number

EP 06 00 4769

The Search Division considers that the present European patent application does not comply with the requirements of unity of invention and relates to several inventions or groups of inventions, namely:

1. claims: 1, 2, 5, 10, 11, 12, 14, 15, 16, 17, 20, 25, 26, 27

   STBC encoded OFDM transmission employing the Alamouti space-time coding matrix assigning the rows to antennas and the columns to OFDM symbols of a particular carrier
   ---

2. claims: 3, 6, 7, 18, 21, 22

   STBC encoded OFDM transmission encoding using a space-time coding matrix combining the Alamouti scheme with antenna hopping for four transmit antennas
   ---

3. claims: 4, 8, 9, 19, 23, 24

   spatial multiplexing combined with OFDM transmission
   ---

4. claims: 13, 28

   STBC encoded OFDM transmission puncturing some subcarriers of the OFDM symbol for introducing pilot symbols
   ---

EP 1 701 464 A1

## ANNEX TO THE EUROPEAN SEARCH REPORT
## ON EUROPEAN PATENT APPLICATION NO.

EP 06 00 4769

This annex lists the patent family members relating to the patent documents cited in the above-mentioned European search report.
The members are as contained in the European Patent Office EDP file on
The European Patent Office is in no way liable for these particulars which are merely given for the purpose of information.

24-07-2006

| Patent document cited in search report | | | Publication date | Patent family member(s) | | | Publication date |
|---|---|---|---|---|---|---|---|
| WO 2004073275 | A | | 26-08-2004 | AU | 2003205761 | A1 | 06-09-2004 |
| | | | | EP | 1593245 | A1 | 09-11-2005 |
| US 2004022183 | A1 | | 05-02-2004 | NONE | | | |
| US 2003095533 | A1 | | 22-05-2003 | AU | 2002348618 | A1 | 26-05-2003 |
| | | | | CA | 2434123 | A1 | 22-05-2003 |
| | | | | CN | 1489844 | A | 14-04-2004 |
| | | | | EP | 1442545 | A1 | 04-08-2004 |
| | | | | JP | 2005510126 | T | 14-04-2005 |
| | | | | WO | 03043245 | A1 | 22-05-2003 |
| US 2004233838 | A1 | | 25-11-2004 | AU | 2003236005 | A1 | 20-10-2003 |
| | | | | CN | 1572080 | A | 26-01-2005 |
| | | | | EP | 1494381 | A1 | 05-01-2005 |
| | | | | WO | 03085869 | A1 | 16-10-2003 |
| US 2003072395 | A1 | | 17-04-2003 | WO | 03034646 | A2 | 24-04-2003 |
| | | | | CN | 1605171 | A | 06-04-2005 |
| | | | | EP | 1438800 | A2 | 21-07-2004 |
| US 2003067993 | A1 | | 10-04-2003 | NONE | | | |
| WO 03056742 | A | | 10-07-2003 | AU | 2003201162 | A1 | 15-07-2003 |
| | | | | BR | 0306718 | A | 28-12-2004 |
| | | | | CA | 2472243 | A1 | 10-07-2003 |
| | | | | CN | 1623293 | A | 01-06-2005 |
| | | | | EP | 1468517 | A1 | 20-10-2004 |
| | | | | JP | 2005513953 | T | 12-05-2005 |
| | | | | MX | PA04006551 | A | 13-07-2005 |
| | | | | ZA | 200405403 | A | 24-01-2005 |

EPO FORM P0459

For more details about this annex : see Official Journal of the European Patent Office, No. 12/82

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 200519849

### Non-patent literature cited in the description

- Space-Time Block Coding from Orthogonal Designs. *IEEE Trans. On Info., Theory,* July 1999, vol. 45, 1456-1467

- A Simple Transmit Diversity Technique for Wireless Communications. *IEEE Journal on Selected Area in Communications,* October 1988, vol. 16, 1451-1458